# EUROPEAN PATENT SPECIFICATION

(11) **EP 0 400 543 B1**
(45) Date of publication and mention of the grant of the patent: **01.03.1995**
(21) Application number: 90110093.3
(22) Date of filing: 28.05.1990
(51) Int. Cl.: H04N 1/42, H04N 1/00

(54) **Facsimile transmission system**
Gerät zur Faksimileübertragung
Appareil pour téléautographie

(30) Priority: 29.05.1989 JP 135658/89
(43) Date of publication of application: 05.12.1990
(73) Proprietor: SHARP KABUSHIKI KAISHA, Osaka (JP)
(72) Inventor: Morita, Hiroyuki, Yamatokoriyama-shi, Nara-ken (JP)
(74) Representative: TER MEER STEINMEISTER & PARTNER GbR

(56) References cited:
- DE-A- 3 835 448
- GB-A- 2 187 057

## Description

### BACKGROUND OF THE INVENTION

### (1) Field of the Invention

This invention relates to a facsimile transmission system, more particularly relates to a facsimile transmission system in which a plurality of terminal devices are respectively constructed by separating a manuscript reading portion from a facsimile apparatus, and are connected to the facsimile apparatus.

### (2) Description of the Prior Art

In a conventional facsimile apparatus, all functions of a manuscript reading portion, a recording (printing) portion, a communication portion and so on are integrally provided in one apparatus itself and the apparatus is connected to one telephone line which is occupationally used.

In the conventional apparatus as mentioned above, it is necessary to provide one telephone line relative to one apparatus, and there is a problem with respect to effective utilization of the telephone line , and also there is a problem with regard to operation efficiency of communication function of the apparatus. There was an aspect that the apparatus has not always been used effectively.

Further, in a "facsimile exchange system" described in Unexamined Japanese Patent Publication No. 81719/1979, it is disclosed that a plurality of facsimile terminal devices are respectively connected to a telephone exchange device which is in turn connected to an external line through an information compression device which is used in common by each of the facsimile terminal devices.

DE 38 35 448 A1 discloses a teleconference-system reducing space requirements for individual terminals. This teleconference-system comprises a large screen display connected to several individual terminals for the respective participants. Each individual terminal consists of a compact electronic writing board enabling every participant to enter individual contributions, a video selector connected to the compact electronic writing board as well as a compact output unit reproducing individual contributions of each participant, a copier generating hard copies of the images reproduced on the large screen display or the compact output unit. The entire teleconference-system consists of a video memory for the compact output unit of each individual terminal as well as a video memory for the large screen display, and transmitting and receiving units for communicating with other similar systems.

### SUMMARY OF THE INVENTION

This invention provides a facsimile transmission system which comprises a single central device connected to an external network and having a communication function for communicating with the external network and a recording function, an internal line connected to said single central device, a plurality of terminal devices each connected to said central device through said internal line for sharing said communication function and each comprising essentially a reading function, the system further comprising a transmission control means provided in said central device for controlling transmission of manuscript reading information from any of said terminal devices to said central device in time division so that the communication function of said central device is used to transmit said information to the external network, the system being characterized by an input/output function and a function for controlling said reading function and said input/output function, wherein in case that an acknowledgement signal is returned from said central device to said terminal device, said terminal device transmits an image information to said central device and in case that an acknowledgement signal is not returned from said central device to said terminal device, said terminal device carries out a recalling to said central device.

The central device of this invention is basically constructed by excluding a reading function from a conventional well-known facsimile apparatus, and the terminal device is preferably constructed to have the reading function only which is excluded from the facsimile apparatus. However, the central device may be provided with the reading function without limitation to the construction as mentioned above.

The central device from which the reading function is excluded is chiefly constructed by a communication function portion including a telephone network control unit, a modem, a transmission control circuit and a coding/decoding circuit, a recording function portion including a printer and a recording control circuit for controlling the printer, and a transmission/reception control portion for controlling these function portions.

The terminal devices are respectively constructed in the same manner and mainly constructed by a reading portion having for example a CCD, an input/output portion, and a reading control portion for controlling these portions.

Further, in this invention, a time division defines that one device is used in divided time for more than two purposes and simultaneously operated on appearance.

The facsimile system of this invention is so constructed that the plurality of terminal devices each having a reading function are respectively connected through an internal line to the central device having an external communication function and a recording function and are connected to an external telephone network, and a manuscript reading information transmitted from each terminal device is transmitted externally by using the communication function of the central device in time division.

Therefore, according to this invention, the manuscript information is transmitted through the internal line to the central device and then transmitted to the external telephone network through the communication function of the central device, and one telephone line and one communication function are used in time division by a plurality of reading units. As a result, the telephone and the communication device can be utilized effectively.

### BRIEF DESCRIPTION OF THE DRAWINGS

An embodiment of the invention will now be described by way of examples and with reference to the accompanying drawings in which:
Fig.1 is a block diagram showing the construction of a facsimile transmission system according to one embodiment of this invention;
Fig.2 is a flow chart showing the operation of a terminal device according to the embodiment of Fig.1;
Fig.3 is a flow chart showing the operation of a central device according to the embodiment of Fig.1;
Fig.4 is a timing chart showing a various kind of signals inputted and outputted from the terminal device and the central device.

### DESCRIPTION OF THE PREFERRED EMBODIMENTS

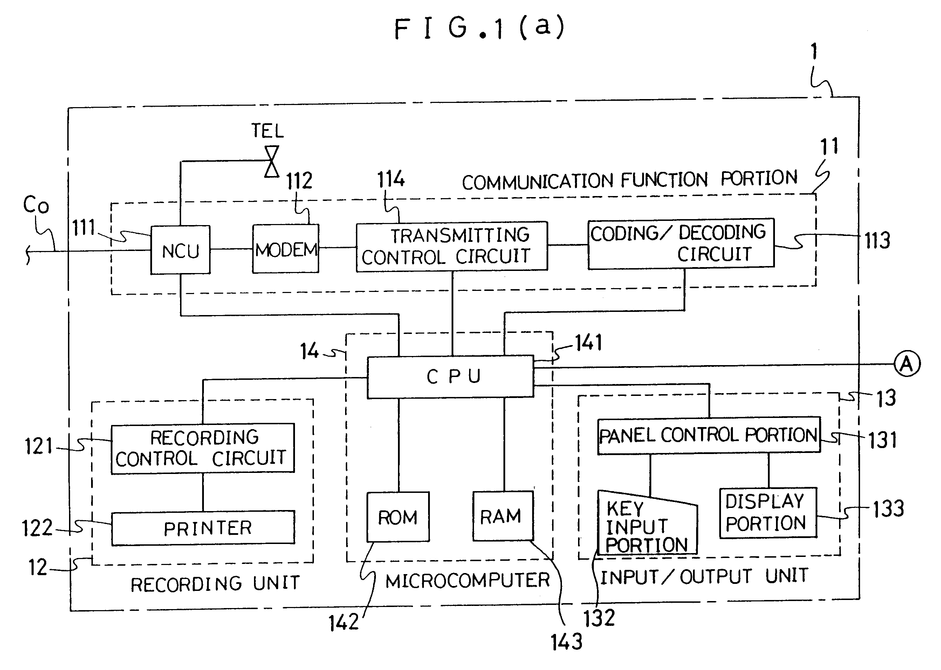

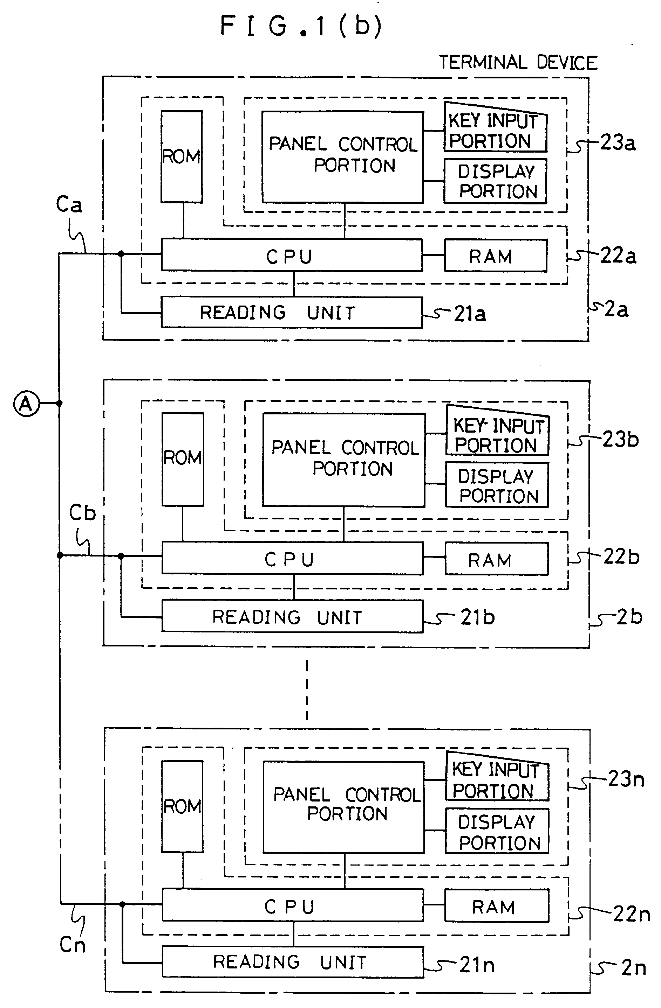

In Fig.1, a central device 1 is provided with one communication function portion 11 connected to one telephone line C₀, one recording unit 12, an input/output unit 13, and a microcomputer 14 for controlling these elements.

The communication function portion 11 is well known and is chiefly provided with a telephone network control unit (NCU) 111, a modem 112, and a coding/decoding circuit 113 including a transmitting signal buffer, a coding circuit, a receiving signal buffer and a decoding circuit, and a transmission control circuit 114 for controlling a communication mode setting and a protocol.

The microcomputer 14 is mainly constructed by a CPU 141, a ROM 142 for storing a control program of the CPU 141, and a RAM 143 for storing a communication mode. The recording unit 12 connected to the microcomputer 14 is constructed by a recording control circuit 121 and a printer 122, which receives a signal through the telephone network control unit 111 and which is capable of printing an image obtained by decoding the signal on a sheet. The input/output unit 13 connected to the microcomputer 14 is constructed by a panel control portion 131, a key input portion 132 and a display portion 133 consisting of for example an LCD, and performs a communication mode setting and also performs various kinds of displays, for example, a display of addressee telephone number or a display of whether or not to which of terminal devices (described later) and the central device is connected.

A plurality of terminal devices 2ₐ ,2 _{b},...2 ₙ are respectively connected to the central device 1 described above through internal lines Cₐ , C_{b} ,....C_{n.}

The terminal devices 2 ₐ , 2 _{b}, ... 2 ₙ are respectively provided with reading units 21ₐ ,21 _{b} ,...21 ₙ, and microcomputers 22ₐ, 22 _{b} ,...22 ₙ . The microcomputers 22 ₐ, , 22 _{b} ,...22 ₙ respectively control the corresponding reading units 21ₐ , 21 _{b}, ...21 ₙ and also are connected to the microcomputer 14 of the central device 1 through the internal lines Cₐ ,C _{b} ,....C ₙ.

The terminal devices 2 ₐ , 2 _{b},...2 ₙ are respectively constructed in the same way. By taking one example of the terminal device 2ₐ, description is made concretely. The terminal device 2ₐ includes the reading unit 21ₐ realized by a CCD (charge coupled device), the microcomputer 22ₐ having a CPU, ROM and RAM, and an input/output unit 23ₐ having a panel control portion, a key input portion and a display portion. The key input portion is provided for inputting an addressee telephone number, and the display portion is provided for displaying the inputted addressee telephone number and for displaying that the transmission is impossible when the central device 1 is under transmission. The microcomputer 22ₐ actually performs a sending and receiving operation of commands to the central device 1, which include a transmitting requirement signal and a reading termination signal, a transmitting control of image information to the central device 1, a timing control of reading of the reading unit 21ₐ , and a display control of recognizing and processing states of input signal from the key input unit portion.

The terminal device 2ₐ thus constructed reads a manuscript image at each unit picture element and at each one line and then transmits it to the microcomputer 4 of the central device 1.

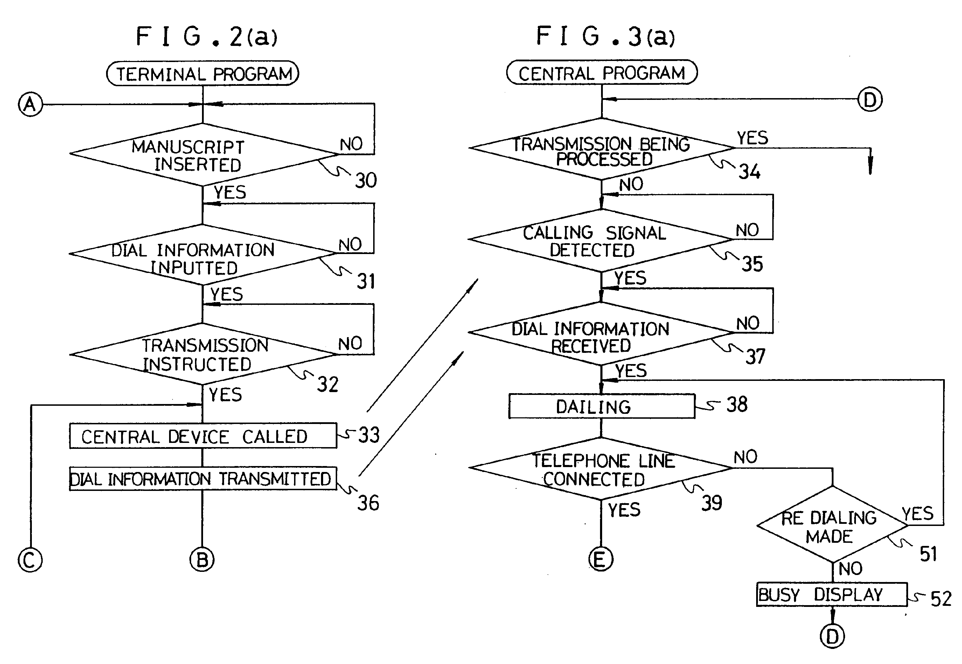

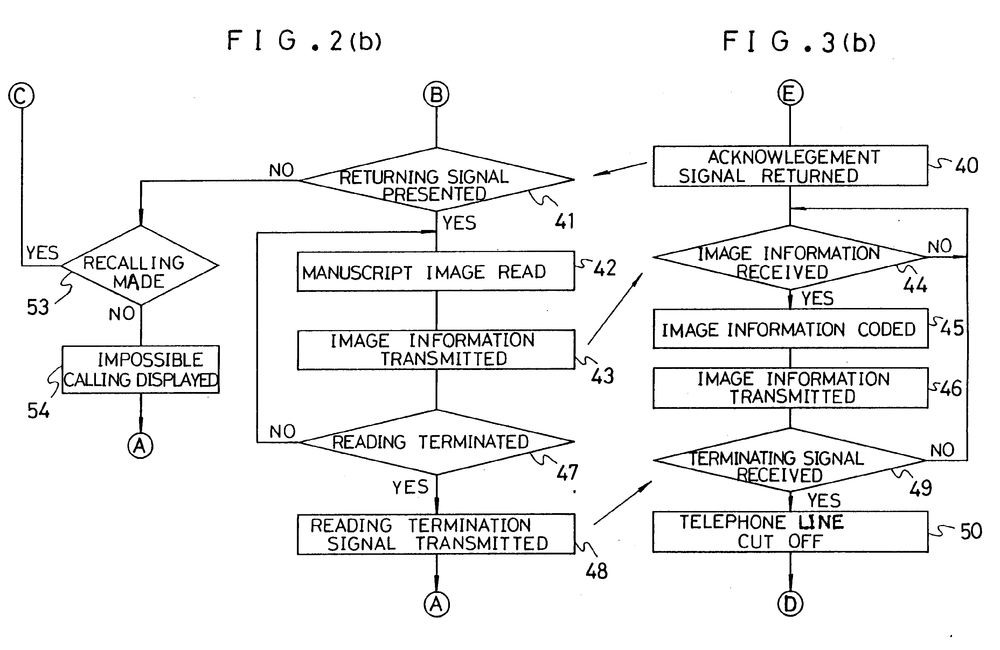

Further, a communication program having a flow chart shown in Figs. 2 and 3 is written in the microcomputer 22ₐ, 22 _{b},...22 ₙ of the terminal devices and the microcomputer 13 of the central deive 1, and each of the devices performs the following process in accordance with the communication program.

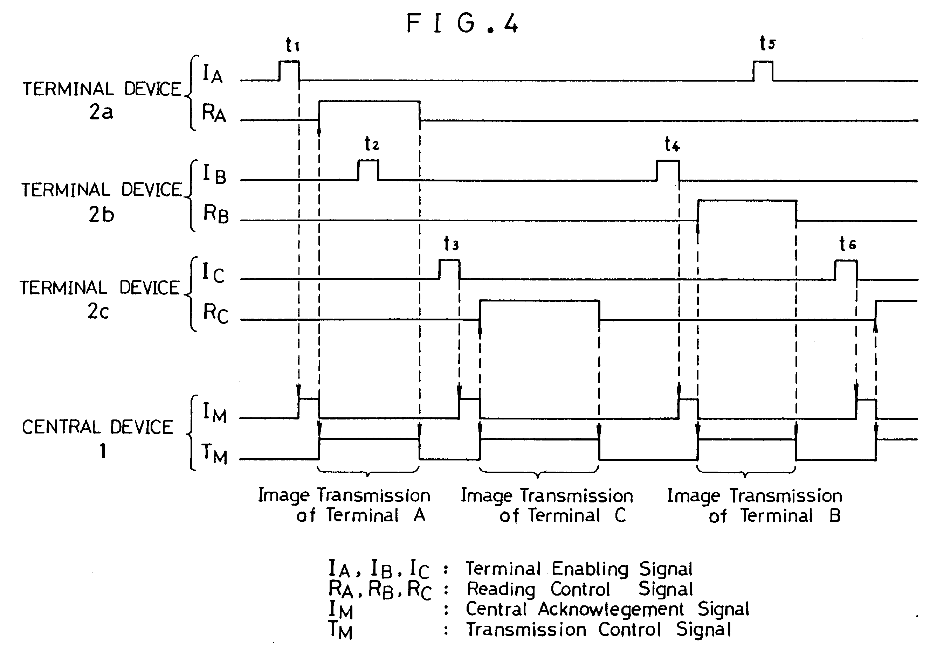

Description is made also by referring to a timing chart shown in Fig.4.

When a manuscript is inserted to the reading unit 21a of the terminal device 2 ₐ (step 30), an addressee telephone number is inputted (step 31), and a transmission key is depressed (step 32), the microcomputer 22 ₐ of the terminal device applies at a time t₁ an enable signal to the microcomputer 4 of the central device 1 and provides a call to the central device 1 (step 33). The central device 1 acknowleges the presence or absence of a transmitting control signal T _{M} (step 34) and decides whether a signal is being transmitted or not. In the absence of the transmitting control signal T _{M}, the enable signal is detected (step 35), and a signal reception of telephone number information from the terminal device 2 ₐ is stood by. When the telephone circuit number information is received (step 36 to step 37). dialing is carried out to an addressee fascimile (step 38) and it is decided that the telephone line is connected or not (step39). When the telephone line is connected, an acknowlegement signal I _{M} is returned to the terminal device 2a and also a busy flag is turned "on". The microcomputer 22ₐ of the terminal device 2ₐ receives the acknowlegement signal I _{M} and begins reading of the manuscript (step 41 to step 42), and an image information read from the manuscript is transmitted to the microcomputer 14 of the central device 1 (step 43). When the central device 1 receives the image information, the image information is coded and transmitted to the addressee facsimile (step 44 to step 46). The reading unit 21ₐ of the terminal device 2ₐ terminates reading of the manuscript (step 47), a reading termination signal is sent to the microcomputer 4 of the central device 1 (step 48). The central device 1 receives the reading termination signal and cuts off the telephone circuit and then turns "off" the busy flag (step 49 to step 50). The processing is returned again to the transmitting processing step 34.

Further, in the step 39 of the central device processing, if the telephone line is not connected, then it is decided whether re-dialing is carried out or not (step 51). If not, the display portion 132 of the central device 1 displays that the telephone circuit is busy by means of characters or indicators (step 52).

In addition, in the step 41 of the terminal device processing, if the acknowlegemnet signal is not obtainable from the central device 1 in response to the call of the terminal device 2 _{b} as shown in a time t₂, then it is decided whether or not re-calling is carried out relative to the central device 1 (step 53). If the re-calling is carried out, then the processing is returned to the step 33, and after the lapse of a predetermined time t₄ , the re-calling is carried out relative to the central device 1. That is, in case the enable signal is sent to the central device 1 from the terminal device 2 _{b} , and if the central device 1 is transmitting an image information obtained from another terminal device, then the central device 1 does not send the acknowlegement signal and hence the terminal device 2_{b} does not read the image and is stood by. If the step 53 decides that the re-calling is not carried out, then the display portion of the terminal device 2 _{b} displays that the call of the central device 1 is impossible by means of the indicator (step 54). The re-calling is performed only when a re-calling mode is preset in the microcomputer 22_{b} of the terminal device 2_{b}.

As mentioned above, each of the terminal devices 2ₐ ,2 _{b} , ....2ₙ is so constructed that when the manuscipt is inserted to the reading unit, and the re-calling is carried out relative to the central device 1, and the acknowlegement signal is returned from the central device 1, the manuscipt of the terminal device which requires the calling is read. As a result, the single central device having the communication function permits time division of image information transmission from a plurality of terminal devices.

## Claims

1. A facsimile transmission system comprising:
a single central device (1) connected to an external network and having a communication function (11) for communicating with the external network and a recording function (12);
an internal line (A) connected to said single central device (1); a plurality of terminal devices (2a, 2b, ..., 2n) each connected to said central device (1) through said internal line (A) for sharing said communication means (11) and each comprising essentially a reading function (21a, 21b, ..., 21n);
a transmission control means (114, 14) provided in said central device (1) for controlling transmission of manuscript reading information from any of said terminal devices (2a, 2b, ..., 2n) to said central device (1) in time division so that the communication function (11) of said central device (1) is used to transmit said information to the external network,
**characterized by**
an input-output function (23a, 23b,..., 23n) and function (22a, 22b, ..., 22n) for controlling said reading function (21a, 21b, ..., 21n) and said input/output function (23a, 23b, ..., 23n);
wherein in case that an acknowledgement signal (I_{M}) is returned from said central device (1) to said terminal device (2a, 2b,..., 2n), said terminal device (1) transmits an image information to said central device (1) and in case that an acknowledgement signal (I_{M}) is not returned from said central device (1) to said terminal device (2a, 2b, ..., 2n), said terminal device (2a, 2b, ..., 2n) carries out a recalling to said central device (1).

2. A system according to Claim 1, wherein said transmission control means (114, 14) includes a microcomputer(14) having a controlling operation which, when a calling is carried out relative to said central device (1) from the terminal devices (2a, 2b, ..., 2n), it is decided whether the internal line (A) is empty or not, and only when the internal line is empty, manuscript reading information from the terminal devices (2a, 2b, ..., 2n) which requires the calling is received and transmitted to the external network.

3. A system according to Claim 1, wherein said terminal device (1) further includes information means for informing that an internal line is busy when the calling is carried out relative to said central device (1) from said terminal device (2a, 2b, ..., 2n) and the internal line (A) is closed.

4. A system according to Claim 1, wherein the communication function (11) of said central device includes a telephone network control unit (111), a modem (112), a transmitting control circuit (114) and a coding/decoding circuit (113).

5. A system according to Claim 1, wherein the recording function of said central device (1) includes a printer (112) and a recording control circuit (121) for controlling the printer (122).

6. A system according to Claim 1, wherein said plurality of terminal devices (2a, 2b, ..., 2n) are respectively constructed in the same manner.

## Patentansprüche

1. Faksimileübertragungssystem mit:
- einer einzigen zentralen Vorrichtung (1), die mit einem externen Netz verbunden ist und über Kommunikationsfunktion (11) zum Kommunizieren mit dem externen Netz und über Aufzeichnungsfunktion (12) verfügt;
- einer internen Leitung (A), die mit dieser einzelnen zentralen Vorrichtung (1) verbunden ist;
- mehreren Endstellenvorrichtungen (2ₐ, 2_{b}, ..., 2ₙ), die mit der internen Leitung (A) jeweils mit der zentralen Vorrichtung (1) verbunden sind, um die Kommunikationseinrichtung (11) gemeinsam zu nutzen, und die jeweils im wesentlichen Lesefunktion (21ₐ, 21_{b}, ..., 21ₙ) aufweisen;
- einer Übertragungssteuereinrichtung (114, 14), die in der zentralen Vorrichtung (1) vorhanden ist, um die Übertragung von Vorlage-Leseinformation von einer der Endstellenvorrichtungen (2ₐ, 2_{b}, ..., 2ₙ) an die zentrale Vorrichtung (1) im Zeitmultiplex zu steuern, so daß die Kommunikationsfunktion (11) der zentralen Vorrichtung (1) dazu verwendet wird, die Information an das externe Netz zu übertragen;
**gekennzeichnet durch**
- eine Eingabe/Ausgabe-Funktion (23ₐ, 23_{b}, ..., 23ₙ) und eine Funktion (22ₐ, 22_{b}, ..., 22ₙ) zum Steuern der Lesefunktion (21ₐ, 21_{b}, ..., 21ₙ) und der Eingabe/Ausgabe-Funktion (23ₐ, 23_{b}, ..., 23ₙ);
- wobei dann, wenn von der zentralen Vorrichtung (1) ein Bestätigungssignal (I_{M}) an die Endstellenvorrichtung (2ₐ, 2_{b}, ..., 2ₙ) rückgeliefert wird, die Endstellenvorrichtung eine Bildinformation an die zentrale Vorrichtung (1) überträgt, und wobei dann, wenn kein Bestätigungssignal (I_{M}) von der zentralen Vorrichtung (1) an die Endstellenvorrichtung (2ₐ, 2_{b}, ..., 2ₙ) rückgeliefert wird, die Endstellenvorrichtung (2ₐ, 2_{b}, ..., 2ₙ) einen Neuaufruf an die zentrale Vorrichtung (1) ausführt.

2. System nach Anspruch 1, bei dem die Übertragungssteuereinrichtung (114, 14) einen Mikrocomputer (14) mit Steuerfunktion beinhaltet, durch die dann, wenn von den Endstellenvorrichtungen (2ₐ, 2_{b}, ..., 2ₙ) ein Ruf an die zentrale Vorrichtung (1) ausgeführt wird, entschieden wird, ob die interne Leitung (A) frei ist oder nicht, und nur dann, wenn die interne Leitung frei ist, Vorlage-Leseinformation von der Endstellenvorrichtung (2ₐ, 2_{b}, ..., 2ₙ), die den Aufruf ausführte, empfangen und an das externe Netz übertragen wird.

3. System nach Anspruch 1, bei dem die Endstellenvorrichtung (1) ferner eine Informationseinrichtung aufweist, die dazu dient, darüber zu informieren, daß die interne Leitung belegt ist, wenn von der Endstellenvorrichtung (2ₐ, 2_{b}, ..., 2ₙ) ein Aufruf an die zentrale Vorrichtung (1) ausgeführt wird und die interne Leitung (A) gesperrt ist.

4. System nach Anspruch 1, bei dem die Kommunikationsfunktion (11) der zentralen Vorrichtung eine Telefonnetz-Steuereinheit (111), ein Modem (112), eine Übertragungssteuerschaltung (114) und eine Codier/Decodier-Schaltung (113) beinhaltet.

5. System nach Anspruch 1, bei dem die Aufzeichnungsfunktion der zentralen Vorrichtung (1) einen Drucker (112) und eine Aufzeichnungssteuerschaltung (121) zum Steuern des Druckers (122) aufweist.

6. System nach Anspruch 1, bei dem die mehreren Endstellenvorrichtungen (2ₐ, 2_{b}, ..., 2ₙ) jeweils auf dieselbe Weise aufgebaut sind.

## Revendications

1. Système de transmission par télécopie comprenant :
un dispositif central unique (1) connecté à un réseau externe et possédant une fonction de communication (11) pour communiquer avec le réseau externe et une fonction d'enregistrement (12);
une ligne interne (A) connectée audit dispositif central unique (1), plusieurs terminaux (2a, 2b, ... 2n) dont chacun est connecté audit dispositif central (1) par ladite ligne interne (A) pour partager lesdits moyens de communication (11) et comporte essentiellement une fonction de lecture (21a, 21b, ... 21n);
des moyens de commande de transmission (114, 14) installés dans ledit dispositif central (1) pour commander la transmission de l'information de lecture du manuscrit depuis n'importe lequel desdits terminaux (2a, 2b, ... 2n) vers ledit dispositif central (1) en partage de temps de telle sorte que la fonction de communication (11) dudit dispositif central (1) soit utilisée pour transmettre ladite information au réseau externe,
**caractérisé par**
une fonction d'entrée/sortie (23a, 23b, ... 23n) et une fonction (22a, 22b, ... 22n) permettant de commander ladite fonction de lecture (21a, 21b, ... 21n) et ladite fonction d'entrée/sortie (23a, 23b, ... 23n);
dans lequel, au cas où ledit dispositif central (1) renvoie un signal d'accusé de réception (I_{M}) audit terminal (2a, 2b, ... 2n), ledit terminal transmet une information d'image audit dispositif central (1) et, au cas où ledit dispositif central (1) ne renvoie pas de signal d'accusé de réception (I_{M}) audit terminal (2a, 2b, ... 2n), ledit terminal (2a, 2b, ... 2n) rappelle ledit dispositif central (1).

2. Système conforme à la revendication 1 dans lequel lesdits moyens de commande de transmission (114, 14) comportent un microordinateur (14) possédant une fonction de commande qui permet, quand les terminaux (2a, 2b, ... 2n) appellent ledit dispositif central (1), de déterminer si la ligne interne (A) est libre ou non et, seulement quand la ligne interne est libre, de recevoir et de transmettre au réseau externe l'information de lecture du manuscrit issue de celui des terminaux (2a, 2b, ... 2n) qui demande l'appel.

3. Système conforme à la revendication 1 dans lequel ledit terminal (2a, 2b, ... 2n) comporte en outre des moyens pour informer que la ligne interne est occupée quand il appelle ledit dispositif central (1) et que la ligne interne (A) est fermée.

4. Système conforme à la revendication 1 dans lequel la fonction de communication (11) dudit dispositif central comporte une unité de commande de réseau téléphonique (111), un modem (112), un circuit de commande de transmission (114) et un circuit de codage/décodage (113).

5. Système conforme à la revendication 1 dans lequel la fonction d'enregistrement dudit dispositif central (1) comporte une imprimante (122) et un circuit de commande d'enregistrement (121) pour commander l'imprimante (122).

6. Système conforme à la revendication 1 dans lequel lesdits terminaux (2a, 2b, ... 2n) sont tous conçus de la même manière.
